# EUROPEAN PATENT SPECIFICATION

(11) **EP 2 523 885 B1**
(45) Date of publication and mention of the grant of the patent: **02.07.2014**
(21) Application number: 11700834.2
(22) Date of filing: 12.01.2011
(51) Int. Cl.: B65H 75/24, F16D 41/067, F16D 41/06

(54) **Friction ring for friction shafts, particularly for winding spools**
Reibring für Reibwellen, insbesondere zum Aufwickeln von Spulen
Bague de frottement pour arbres de frottement, en particulier pour enrouler des bobines

(30) Priority: 16.11.2010 IT MI20102123; 24.05.2010 EP 10163718; 15.01.2010 IT MI20100038
(43) Date of publication of application: 21.11.2012
(73) Proprietor: I.E.S International Expanding Shafts S.R.L., 20098 S. Giuliano Milanese (IT)
(72) Inventor: GATTRUGERI, Stefano, I-20141 Milano (IT); PETTINATI, Franco, I-20099 Sesto San Giovanni (IT)
(74) Representative: Modiano, Micaela Nadia
(86) International application number: PCT/EP2011/050360
(87) International publication number: WO 2011/086106

(56) References cited:
- WO-A1-2006/089679
- DE-A1- 19 805 211
- DE-U1- 8 909 225
- GB-A- 2 300 460
- US-A1- 2003 116 675
- US-B1- 6 712 308

## Description

### Technical Field

The present invention relates to a friction ring for friction shafts, particularly for rewinding spools.

### Background art

As is known, friction rings are already known which are arranged on friction shafts used to rewind multiple spools, with the possibility to avoid generating differences in traction during the winding of the several spools.

In general, known friction rings are provided by means of an inner ring, which can be arranged on the friction shaft, typically provided with strips that extend parallel to the axis and provide friction coupling by introducing compressed air in chambers provided below such strips.

In order to jointly connect each individual core of the spools to the respective ring or rings, an outer ring is provided from which locking elements protrude which are usually constituted by balls or rollers and are actuated in order to move them in a radial direction directly by the rotation of the shaft.

In practice, the balls or rollers are arranged in guides which are defined on the outer surface of the inner ring and have a variable extension or depth, so that upon rotation of the shaft in a preset direction the balls or rollers are made to protrude radially, in order to perform locking on the inner surface of the core.

With this type of solution, when traction is not applied to the individual spools, inevitably the connection of the core of the spool loosens; therefore undue displacements can occur which can create difficulties during the assembly and disassembly of the spools on the rings.

### Disclosure of the invention

A friction coupled core support device is known, for example, from document GB 2 300 460 A.

Document DE 198 05 211 A1 discloses a tensioning device for fixing an inner ring of a friction bearing to a shaft.

The aim of the invention is to solve the problem mentioned above by providing a friction ring for friction shafts, particularly for rewinding spools, which allows to maintain always a stable connection between the core of the spool and the respective ring even if the tension on the spool ceases.

Within this aim, an object of the invention is to provide a friction ring in which it is possible to have particularly fast assembly without having to resort to the use of particular tools or complex solutions.

Another object is to allow a mounting of the friction ring on the friction shaft which is independent of the direction of rotation that the friction shaft will assume during spool winding.

Another object of the present invention is to provide a friction ring in which it is possible to have a particularly fast removal of the spool.

A further object of the present invention is to provide a friction ring for friction shafts, particularly for rewinding spools, which, thanks to its particular constructive characteristics, is capable of giving the greatest assurances of reliability and safety in use.

Another object of the present invention is to provide a friction ring for friction shafts, particularly for rewinding spools, that can be obtained easily with simple mechanical operations starting from commonly commercially available elements and materials and is also competitive from a merely economical standpoint.

This aim and these and other objects that will become better apparent hereinafter are achieved by a friction ring for friction shafts, particularly for rewinding spools, according to the invention, comprising the features set forth in claim 1.

### Brief description of the drawings

Further characteristics and advantages of the present invention will become better apparent from the description of five preferred but not exclusive embodiments of a friction ring for friction shafts, particularly for rewinding spools, illustrated by way of non-limiting example in the accompanying drawings, wherein:
Figure 1 is a schematic exploded perspective view of a first embodiment of the friction ring, according to the invention;
Figure 2 is a sectional view, taken along an axial plane, of a shaft to which a plurality of rings according to the invention, like the one shown in Figure 1, has been applied;
Figure 3 is an enlarged-scale view of a detail of the cross-section in Figure 2;
Figure 4 is a sectional view of the friction ring shown in Figure 1, applied to a friction shaft, before connection to the inside of the core of a spool;
Figure 5 is a sectional view, taken along a plane that is perpendicular to the axis of the shaft of the friction ring shown in Figure 1;
Figures 6, 7, 8 and 9 are perspective views in succession of the step for inserting the elastic means that act between the inner ring and the outer ring of the friction ring shown in Figure 1;
Figure 10 is a perspective view of the friction ring shown in Figure 1, with the retention ring applied in order to make the connection between the inner ring and the outer ring stable;
Figure 11 is an exploded perspective view of a second embodiment of the friction ring according to the invention, with facilitated spring insertion means;
Figure 12 is a view of the friction ring of Figure 11, with the outer ring in position;
Figure 13 is an exploded perspective view of a third embodiment of the friction ring according to the invention with the ramp for arranging the balls placed proximate to the flange;
Figure 14 is a perspective view of the ring of Figure 13, with the spring introduced in the positioning seat;
Figure 15 is a perspective view of the initial step of connection of the outer ring of the friction ring shown in Figure 13;
Figure 16 is a view of the outer ring of the friction ring shown in Figure 13, in position with the locking spiral ring shown in exploded view;
Figure 17 is an enlarged-scale view of the detail of the receptacle and of the correct arrangement for the ball in the friction ring shown in Figure 13;
Figure 18 is an exploded perspective view of a fourth embodiment of the friction ring according to the invention;
Figure 19 is a view of the arrangement of the springs in the friction ring, shown in Figure 18;
Figure 20 is a view of the friction ring of Figure 18, with the outer ring applied thereto;
Figure 21 is a schematic exploded perspective view of a fifth embodiment of the friction ring according to the invention;
Figure 22 is a schematic perspective view of the friction ring shown in Figure 21;
Figure 23 is an enlarged-scale sectional view, taken along an axial plane, of a detail of a shaft to which a plurality of rings according to the invention, such as the one shown in Figure 21, is applied;
Figure 24 is a sectional view, taken along a plane that is perpendicular to the axis of the shaft, of the friction ring shown in Figure 21;
Figures 25 and 26 are sectional views, taken along a plane that is perpendicular to the axis of the shaft, of the friction ring shown in Figure 21 during the steps of winding in two mutually opposite rotation directions.

### Ways of carrying out the invention

With reference to the figures, the friction ring for friction shafts, particularly for winding spools, according to the invention, generally designated respectively by the reference numerals 1a, 1b, 1c, 1d and 1e in the five proposed embodiments, comprises an inner ring 2 that can be arranged on a friction shaft, generally designated by the reference numeral 3 and typically provided by means of a shaft body 4, that is provided peripherally with a plurality of strips 5 that extend parallel to the axis and can expand radially by way of the action of expansion chambers 6 that can be connected to a compressed air supply circuit.

The strips 5 are made to expand with a pressure value that is variable according to the torque that one wishes to impose to the individual cores being rewound, so that the spools can uniform automatically to different traction conditions during winding.

The inner ring 2 has a central body 10 that is provided, at one end, with a flange 11, which can be mated with an outer ring 15 provided with uniformly arranged openings 16 for the exit of locking elements constituted by balls 17 or, optionally, by rollers.

The balls are activated to move them in a radial direction by the rotation between the inner ring 2 and the outer ring 15.

The outer ring 15 is held in position by means of a locking spiral ring 18 inserted in a groove 19, which is defined correspondently on the central body 10.

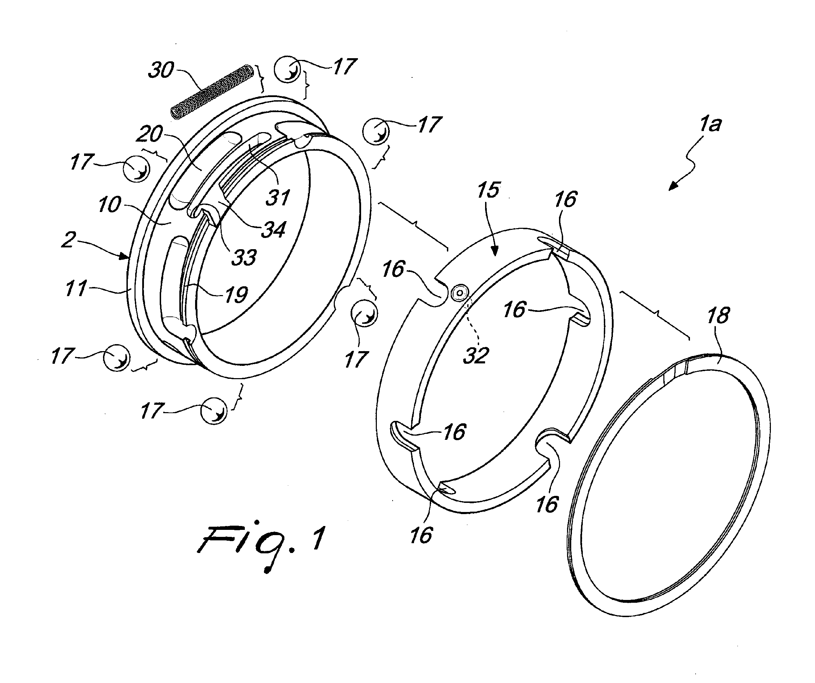

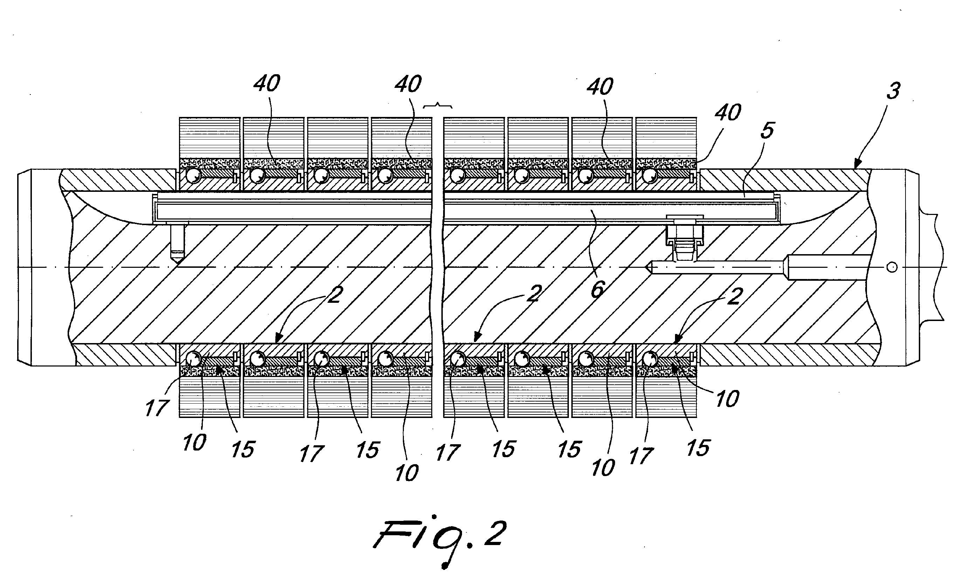

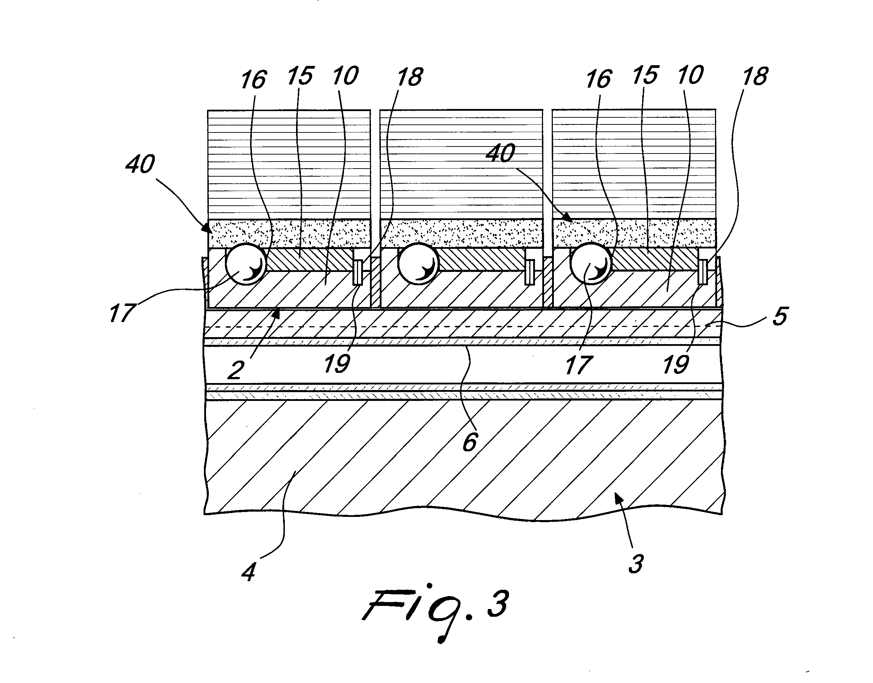

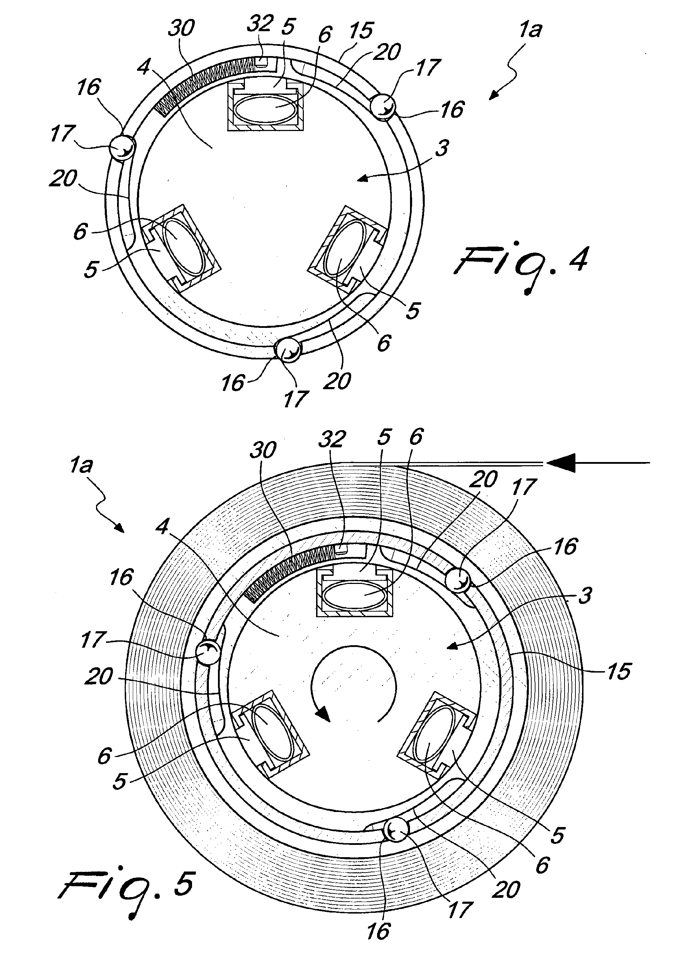

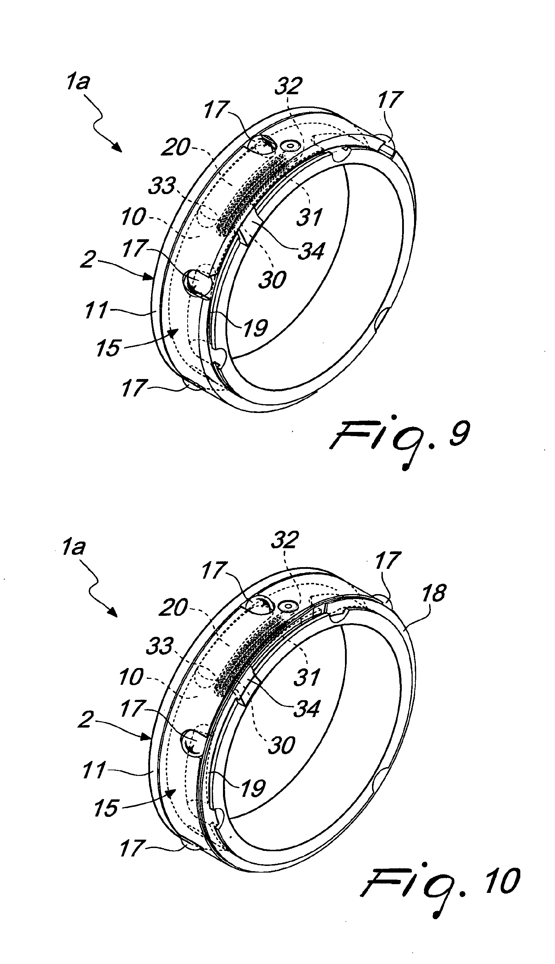

With particular reference to the first embodiment, shown in Figures 1 to 10, on the central body 10 of the friction ring 1a there are activation means provided by means of a plurality of slots 20 that have a ramp-like bottom, so that mutual rotation between the outer ring 15 and the inner ring 2 produces an action on the balls 17 in a radial direction.

A peculiarity of the invention consists in that elastic means are provided which are constituted by a compression spring 30, which acts between the outer ring 15 and the inner ring 2 in order to push the balls 17 radially outward.

In particular, the spring 30 is accommodated in a spring seat 31, which is recessed in the body 10, and has an end that acts against an abutment pin 32, provided on the outer ring 15, and the other end that mates with the abutment end 33 of the seat 31.

Another peculiarity of the invention consists in that there is an insertion portion 34, which connects the spring seat 31 to the outside, leading out at the axial end of the body 10.

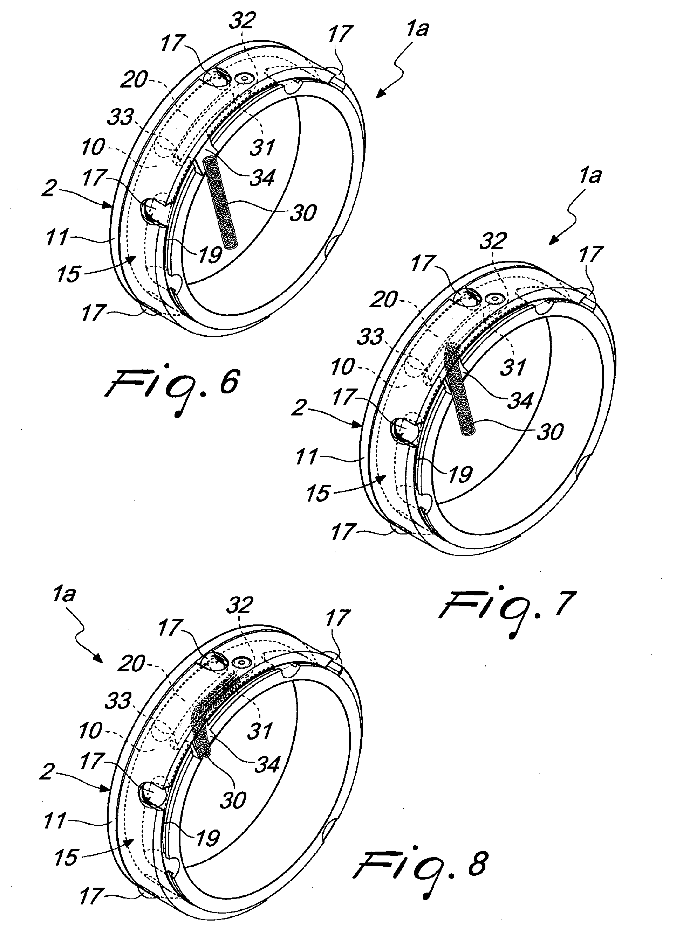

The insertion portion 34, as clearly shown in Figures 6 to 9, allows to insert the spring once the balls 17 have been inserted simply by arranging the abutment pin 32 at the opposite end with respect to the abutment end 33 and by then inserting the compression spring, making the spring pass completely beyond the insertion portion 34 and allowing its expansion so that the spring is arranged against the abutment end 33, thereby the spring is in position.

Once the spring has been positioned, it applies an elastic thrust between the inner ring 2 and the outer ring 15, which keeps the balls 17 in the extracted position even in the absence of traction or of forces applied to a spool 40, which has, for example, been already wound completely.

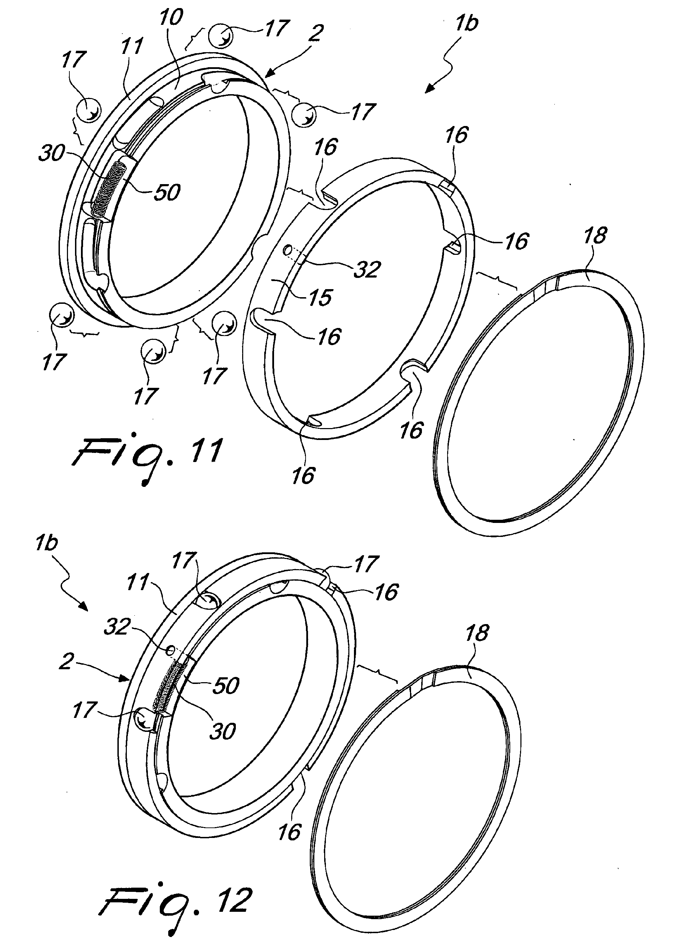

With particular reference to the second embodiment, shown in Figures 11 and 12, a friction ring 1b is described which has simplified means for correct positioning of the spring 30.

In this second embodiment, in which the same components are designated by the reference numerals used previously, there is a hollow 50 that is open in an axial direction on the end of the central body 10 that lies opposite the one that defines the flange 11.

The spring, again designated by the reference numeral 30, can be inserted in the hollow 50 by using the opening in the axial direction of the hollow proper.

Once the spring 30 has been inserted, the outer ring 15, which is provided with the abutment pin 32 that acts on the end of the spring 30, is positioned.

The outer ring 15 is kept in position by means of the locking spiral ring 18, which is inserted in the seat 19 provided in the central body.

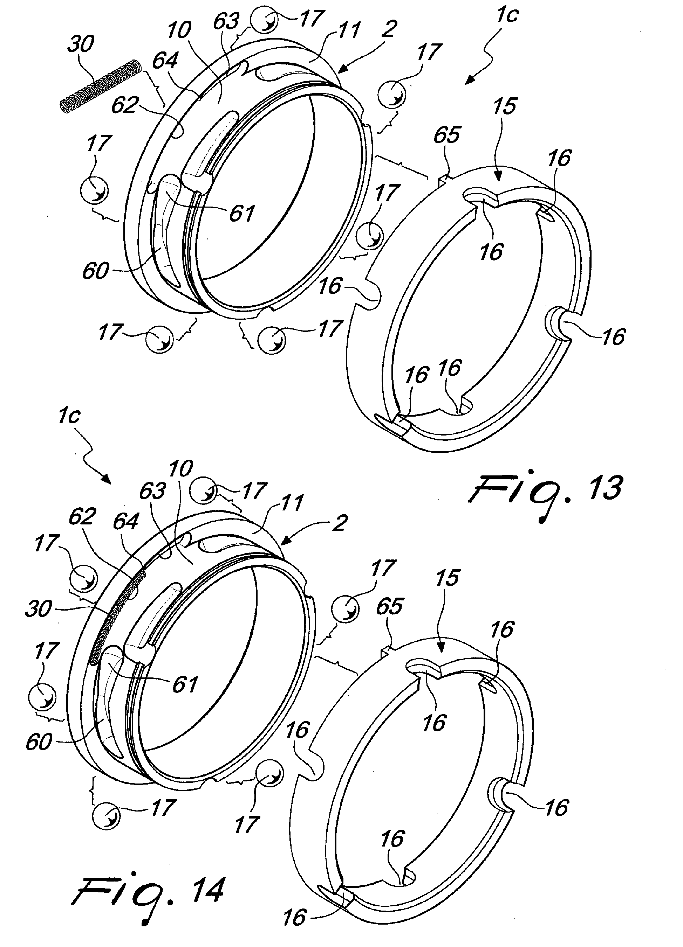

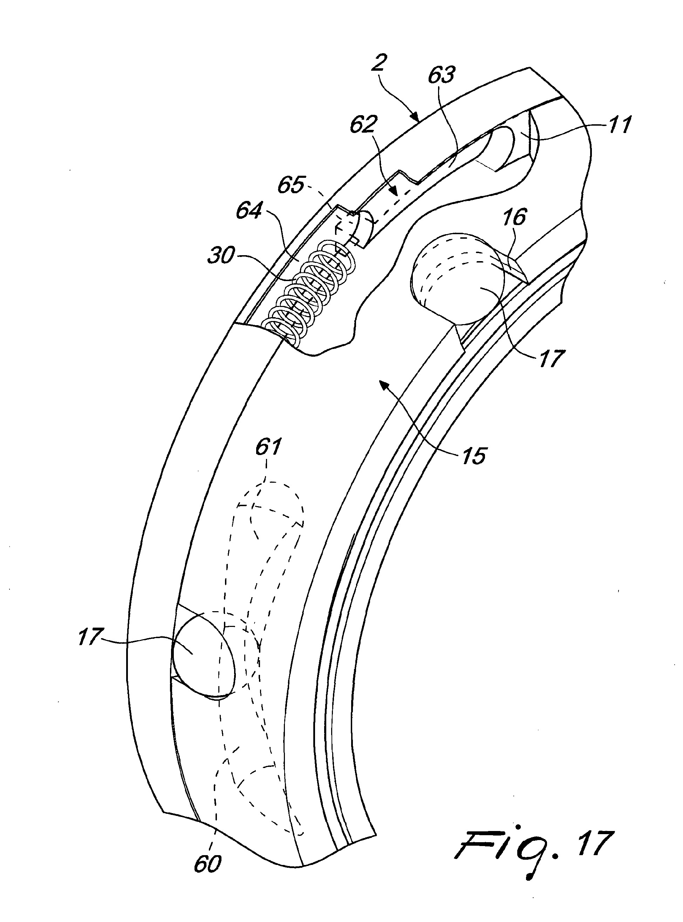

With particular reference to the third embodiment, shown in Figures 13 to 17, a friction ring 1c is illustrated in which there is a ramp for positioning the balls arranged proximate to the flange 11.

In this third embodiment, on the portion of the central body 10 proximate to the flange 11 there are slots which have an active ramp 60 arranged opposite a positioning ramp 61 in which it is possible to insert beforehand a ball 17; the apex of the slot is provided between the ramps 60 and 61.

The friction ring 1c defines, in the flange 11, a receptacle for the spring, designated by the reference numeral 62, which has a raised initial portion 63 and a depressed final portion 64, in which the compression spring, again designated by the reference numeral 30, is inserted.

The seat, which is provided on the face of the flange 11 that is directed toward the central body, allows to insert an axial pin 65 defined by the outer ring, again designated by the reference numeral 15.

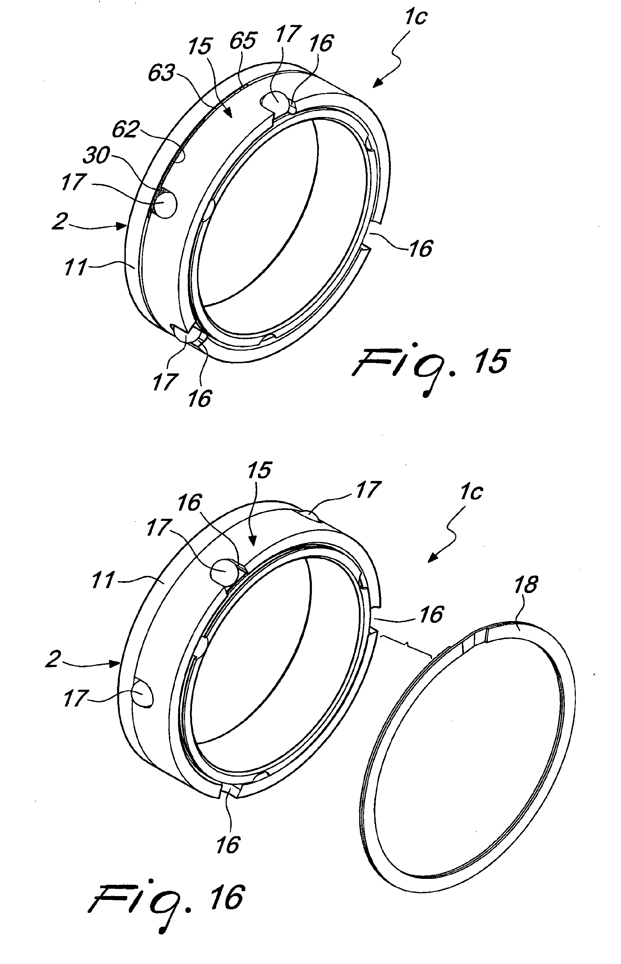

With this embodiment, as shown in Figure 15, the balls 17 are arranged beforehand in the openings 16 and the axial pin 65 is arranged at the raised portion 63, as shown clearly in Figure 15.

A partial rotation is performed which makes the ball 17 pass beyond the apex between the active ramp 60 and the positioning ramp 61 and enter toward the active ramp 60.

At the same time, the axial pin 65 arrives at the depressed portion 64, allowing an axial end approach between the flange 11 and the ring 15, so that the possibility of movement of the pin 65 is limited to the depressed portion, thus preventing the ball 17 from returning, during the normal steps of use, into the positioning ramp 61.

In this case, therefore, the spring 30 is accommodated directly on the flange, consequently simplifying the installation operations.

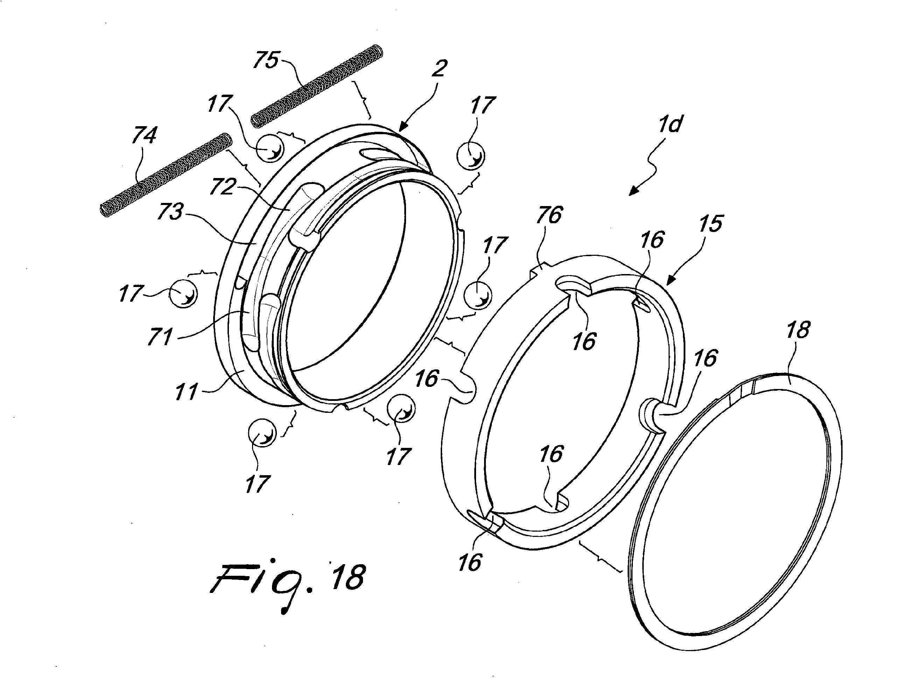

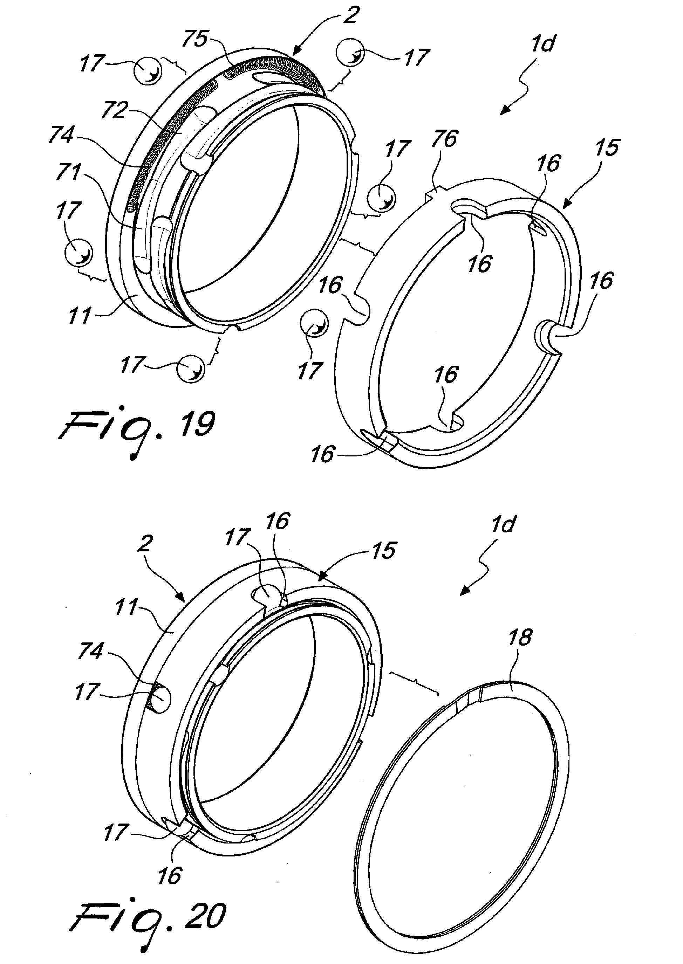

With particular reference to the fourth embodiment, shown in Figures 18 to 20, a friction ring 1d of the bidirectional type is shown in which the slots have a first ramp 71 and a second ramp 72, which are oppositely oriented to one another and have a central apex.

In order to keep the balls 17 in the extracted position, on the flange 11 there is a bidirectional seat 73 in which a first spring 74 and a second spring 75 are inserted so as to be mutually opposite; a bidirectional pin 76 can be arranged between said springs, is associated with the outer ring 15 and allows, by way of the counter-rotation of the ring, to perform, in the initial step of application of the core, the insertion of the ball 17 in one slot or in the other, with the possibility to use the friction ring in both directions, utilizing the engagement of the ball with the core of the spool that is applied, said engagement remaining constant by way of the presence of the core.

In this case also, the insertion step of the springs is extremely simple, because the mutually opposite springs 74 and 75 can be inserted frontally in the bidirectional seat 73 and are then kept in position by the ring 15, which in turn is retained by the spiral ring 18.

In all of the embodiments shown, in order to disengage the cores of the spools 40 it is sufficient to apply a slight counter-rotation of the shaft which, by turning the inner ring with respect to the outer ring, applies compression to the spring and, accordingly, at least a partial retraction of the balls, so that it is possible to extract the cores from the respective rings.

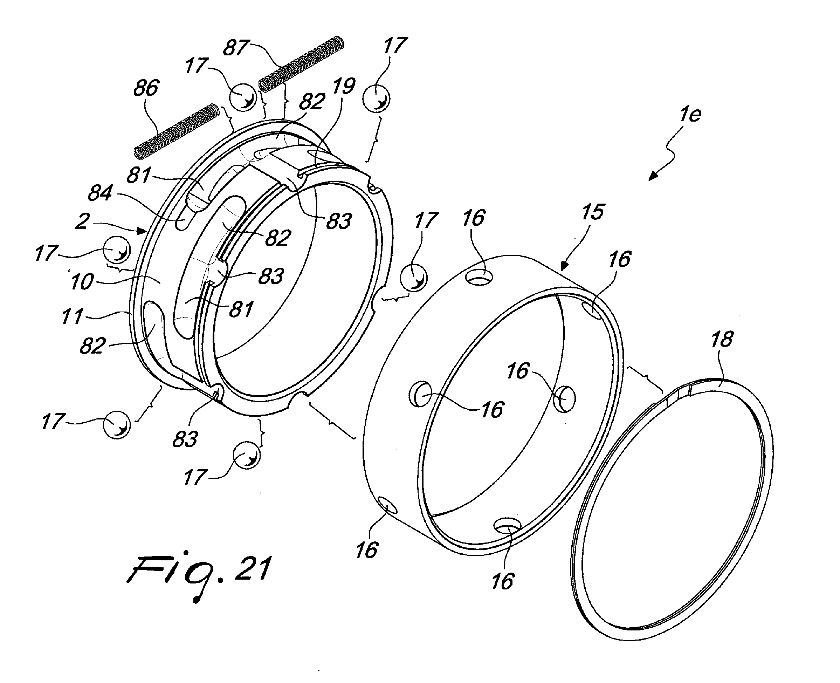

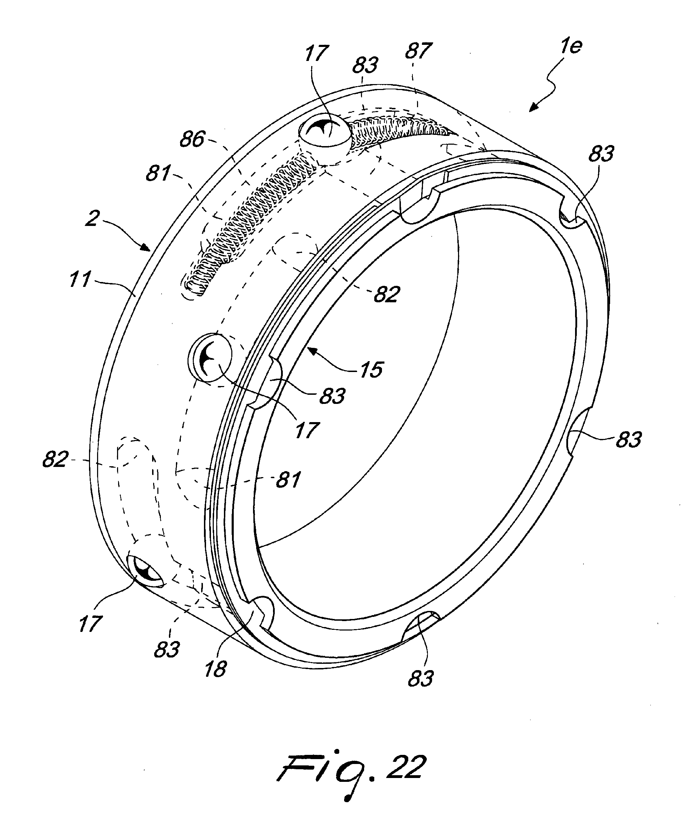

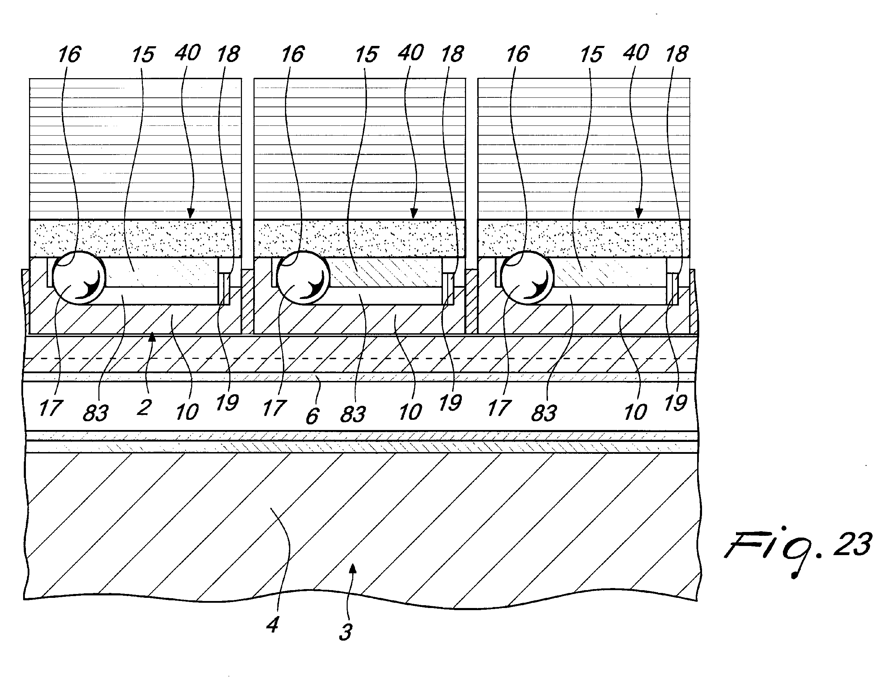

With particular reference to the fifth embodiment, shown in Figures 21 to 26, a friction ring 1e is shown which also is of the bidirectional type and in which the slots are preferably arranged so as to be mutually staggered on the central body 10 at two different axial levels, so as to not interfere with each other.

Such slots are preferably oriented along circular arcs which are coaxial to the central body 10 of the ring 1e and have a first ramp 81 and a second ramp 82, which are oppositely oriented to one another and with a central apex, with an insertion channel 83 for the balls 17, said channel 83 being extended axially from the central apex of the ramps 81 and 82 to the edge of the inner ring 2, in order to allow the insertion of the balls 17 accommodated in the openings 16 in a respective slot when the outer ring 15 is fitted on the central body 10 of the inner ring 2.

Differently from the other embodiments described above, the openings 16 provided on the outer ring 15 of the fifth embodiment are not recesses provided on the two edges of the outer ring 15, but are holes provided on the lateral surface of the outer ring 15, in a staggered manner at two different axial levels so as to make such holes overlap the corresponding slots provided on the central body 10. The machining of the outer ring 15 to obtain the openings 16 is accordingly simplified.

In order to keep the balls 17 in a position that protrudes radially from the openings 16 with respect to the outer lateral surface of the friction ring 1e, on the central body 10 there are two seats 84 and 85 as extensions of the ends of a slot in the direction of the ramps 81 and 82. The ends of a first spring 86 and a second spring 87, which are mutually opposite and between which a corresponding ball 17 can be arranged, are inserted in the seats 84 and 85.

Differently from the fourth embodiment, the seat for the springs is obtained more simply, i.e., in the same manner and on the same surface on which the slots for the balls are provided. Moreover, it is no longer necessary to use an abutment pin for the spring, since the springs act by expansion directly on a ball.

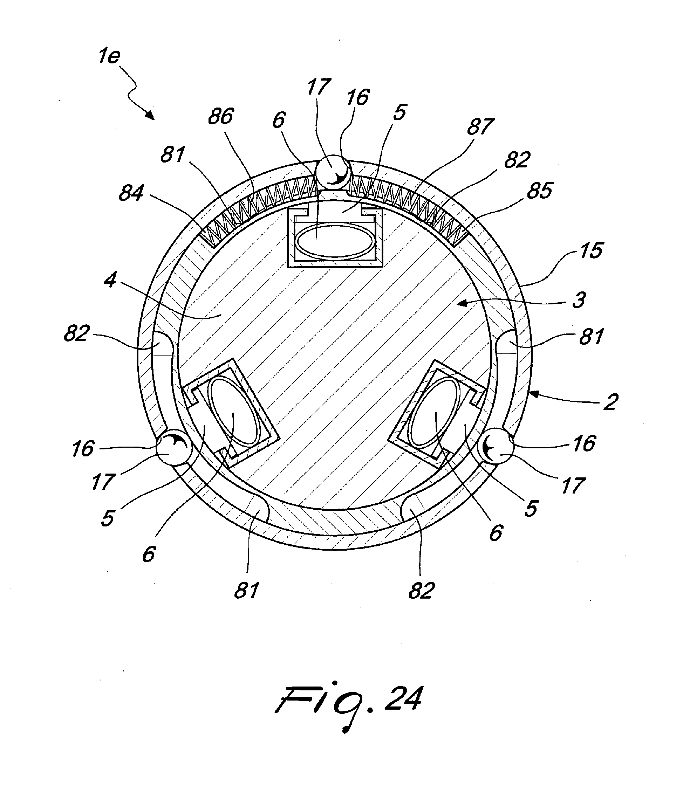

The springs 86 and 87, which are helical and mutually identical, have such a length as to remain preloaded in the balanced position of the friction ring 1e, shown in Figure 24, i.e., with the balls 17 superimposed on the respective central apex on which the ramps 81 and 82 converge.

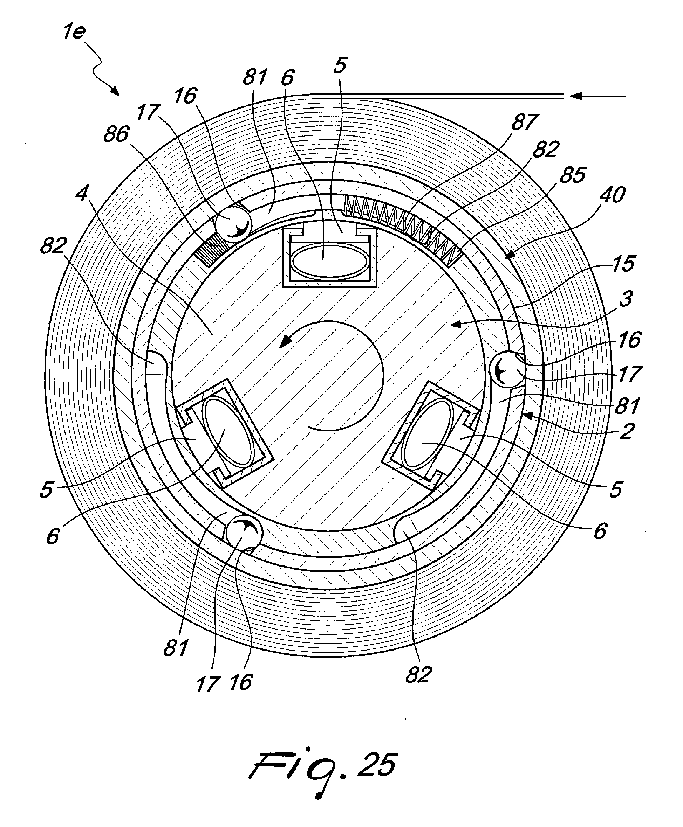

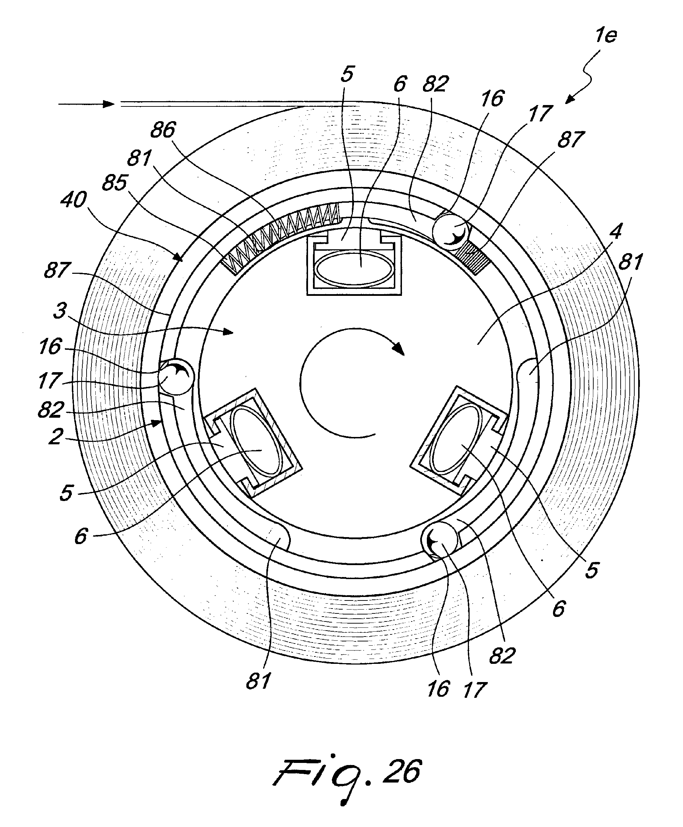

Moreover, the seats 84 and 85, in addition to guiding laterally the respective spring 86 and 87 and providing it with an abutment surface, have such a length as to fully contain the respective spring 86 and 87 when it is compressed, as shown in Figures 25 and 26.

Since the springs 86 and 87 are accommodated in one of the slots provided in the central body of the ring 10, such springs can be installed by resting them radially on the slot, i.e., without inserting them in an axial channel as shown in the first three embodiments. At the same time, by fitting the outer ring 15 on the inner ring 2, the balls 17 arranged in the respective holes 16 of the outer ring 15 slide in the insertion channels 83 until they reach the apexes of the respective slots, and one of them is inserted between the two springs 86 and 87, which consequently abut against it.

Finally, in order to lock axially the outer ring on the inner ring, as in the other embodiments, a locking spiral ring 18 is used, which is inserted in a groove 19 defined correspondingly on the central body 10 of the inner ring 2.

With the bidirectional friction ring as the one described, it is possible to fit the core of a spool 40 on the friction ring 1e by way of a limited rotation of the core 40, which, by friction against at least one of the balls 17 that protrude radially from the friction ring 1e in the inactive position, causes a rotation of the outer ring 15 with respect to the inner ring 2 in the same direction of rotation with which the core 40 is fitted, and a consequent compression of one of the springs 86 and 87. The rotation of the core 40 fitted on the friction ring 1e is thus locked in the opposite direction with respect to the rotation performed to fit it on the friction ring 1e.

With reference to Figure 25, the core 40 has been fitted on the friction ring 1e by turning it in the direction of rotation that matches the rotational direction, indicated by an arrow, of the friction shaft 4 during the winding of the spool. Accordingly, the balls 17 descent along the ramps 81.

The core 40 is thus locked during winding. The rotation of the friction shaft 4 would in fact entail a same rotation of the inner ring 2 with respect to the outer one 15 and a consequent upward displacement of the balls 17 on the respective ramp 81 on which they are located, increasing the locking on the core 40.

Likewise, if the friction shaft 4, in order to achieve winding, must rotate in the opposite direction with respect to the one shown in Figure 25, i.e., in the direction of the arrow of Figure 26, the core 40 is fitted on the friction ring 1e by turning it in the same direction of rotation that the shaft will have during winding; the balls 17 thus descend to the bottom of the respective ramps 82. This means that, with a change of rotation of the friction shaft 4 or with an opposite arrangement thereof with respect to the feeding direction of the tape to be wound onto the cores 40, it is not necessary to disassemble the friction rings 1e from the shaft 4 and reassemble them turned through 180° with respect to their radial direction, but is is simply sufficient to remember to change the direction of rotation with which the cores are fitted onto the friction rings 1e.

In any case, once the winding of the spool has occurred, such spool can be removed manually from the friction ring 1e simply by turning it in the same direction with which the core 40 had been fitted onto the friction ring 1e, i.e., in the direction of rotation of the shaft 4. As an alternative, to extract the spool one can resort to a limited counter-rotation of the shaft 4, as in the other embodiments described above.

Advantageously, the bidirectional ring 1e according to the fifth embodiment can be rendered unidirectional simply by providing on the central body 10 a slot for accommodating a single helical spring 86 or 87 that substantially corresponds to the half-slot of the bidirectional ring 1e that comprises the seat 84, the ramp 81 that leads to the seat 84, and the apex of said ramp 81, or comprises the seat 85, the ramp 82 that leads to the seat 85, and the corresponding apex. The other slots also can be provided so as to contain respectively only the ramp 81 or only the ramp 82. The insertion channel 83 would remain in any case unchanged, like the other parts of the ring 1e described with reference to the fifth embodiment.

With the described arrangement, a friction ring is thus available which is particularly practical and functional, because, in inactive conditions, grip is always applied to the core of the spool connected to the friction ring, preventing undue movements.

Moreover, the presence of the compression spring causes all the friction rings to arrange themselves in the same position when no traction is applied to them.

The invention thus conceived is susceptible of numerous modifications and variations, all of which are within the appended claims.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A friction ring (1) for friction shafts, particularly for winding spools, comprising an inner ring (2), which can be arranged on a friction shaft (3) and is associated with an outer ring (15), from which locking means constituted by balls or rollers (17) protrude for detachably locking the core of a spool (40) that can be mated to said friction shaft (3), activation means being further provided on the central body (10) of said inner ring (2) for activating said locking means (17) by mutual rotation between said inner ring (2) and said outer ring (15), and elastic means (30) that comprise a compression spring (30), **characterized in that** said activation means comprise a plurality of slots (20), provided in said central body (10), that have a ramp-like bottom (60, 61, 71, 2, 81, 82) such that mutual rotation between the outer ring (15) and the inner ring (2) produces an action on said balls or rollers (17) in radial direction, elastic thrust of said compression spring (30) which acts between said inner ring (2) and said outer ring (15) keeping said balls or rollers (17) radially outward in an extracted position.

2. The friction ring according to claim 1, **characterized in that** it comprises, on said inner ring (2), a spring seat (31), said spring seat (31) being able to accommodate an abutment pin (32) which is associated with said outer ring (15), said compression spring (30) acting between said abutment pin (32) and one end of said seat (33).

3. The friction ring according to one or more of the preceding claims, **characterized in that** it comprises, on said inner ring (2), an insertion portion (34) for the connection of said spring seat (31) to the outside, said insertion portion (34) leading at the axial end of said body (10) of said inner ring (2).

4. The friction ring according to one or more of the preceding claims, **characterized in that** said insertion portion (34) leads into said spring seat (31) proximate to, but spaced from, the abutment end (33) of said spring seat (31) where said compression spring (30) acts.

5. The friction ring according to one or more of the preceding claims, **characterized in that** it comprises, on the central body (10) of said inner ring (2), a hollow (50) which is open in an axial direction on the end of said central body (10) that is opposite to the one that defines a flange (11), in order to accommodate said compression spring (30), there being also locking spiral ring (18) in order to retain said outer ring (15) in position.

6. The friction ring according to one or more of the preceding claims, **characterized in that** it comprises, on said central body (10), a positioning ramp (61) arranged on the continuation of an active ramp (60), in order to accommodate, during assembly, said locking means (17), on the flange (11) of said central body (10) there being a receptacle for the spring (62) that has a raised initial portion (63) and a depressed final portion (64), in said depressed final portion (64) there being said compression spring (30), said outer ring (15) having an axial pin (65) that can engage the end of said compression spring (30) in order to push said locking means (17) radially outward.

7. The friction ring according to one or more of the preceding claims, **characterized in that** said axial pin (65) is adapted to abut against the end of said depressed portion (64), on the side of said raised portion (63), in order to act as a rotation locking element and prevent, once said friction ring has been assembled, the passage of said locking means (17) in said positioning ramp (61).

8. The friction ring according to one or more of the preceding claims, **characterized in that** it comprises, on said inner ring (2), slots that define a first ramp (71) and a second ramp (72) which are arranged mutually opposite, with the apex arranged between them, on the flange (11) of said inner ring (2) there being a bidirectional seat (73) that accommodates a first spring (74) and a second spring (75), which are mutually opposite, a bidirectional pin (76) connected to said outer ring (15) being arrangeable between said springs (74, 75).

9. The friction ring according to claim 1, **characterized in that** it comprises, on said inner ring (2), slots that define a first ramp (81) and a second ramp (82) which are oppositely arranged, with their apex located between them, one of said slots accommodating a first helical spring (86) and a second helical spring (87) which are mutually opposite, one of said removable locking means (17) being arranged between said first and second springs (86, 87), both said springs acting on said removable locking means by expansion when said removable locking means is located on said apex.

10. The friction ring according to claim 9, **characterized in that** said one slot comprises guiding seats (84, 85) for said springs (86, 87), said guiding seats (84, 85) being extended circumferentially on said inner ring (2) starting from the opposite ends of the slot that accommodates said first and second spring (86, 87), said guiding seats (84, 85) having such a length as to accommodate fully the respective spring (86, 87) when it is fully compressed.

11. The friction ring according to claim 1, **characterized in that** it comprises, on said inner ring (2), slots that define a first ramp (81), one of said slots accommodating a first helical spring (86) which acts by expansion between a bottom wall of said slot and one of said removable locking means (17), said bottom wall being provided on a guiding seat (84) that is arranged circumferentially on said inner ring (2) starting from one end of the slot that accommodates said first spring (86), said guiding seat (84) having such a length as to accommodate fully the first spring (86) when it is fully compressed.

## Patentansprüche

1. Reibring (1) für Reibwellen, insbesondere zum Wickeln von Spulen, umfassend einen inneren Ring (2), der auf einer Reibwelle (3) angeordnet werden kann und zu einem äußeren Ring (15) gehört, von dem Kugeln oder Walzen (17) hervorragen, zum lösbaren Arretieren des Kerns einer Spule (40), die mit der Reibwelle (3) in Eingriff gebracht werden kann, wobei ferner Aktivierungsmittel am zentralen Körper (10) des inneren Rings (2) vorgesehen sind, zum Aktivieren des Arretiermittels (17) durch wechselseitige Drehung zwischen dem inneren Ring (2) und dem äußeren Ring (15), und elastische Mittel (30), die eine Kompressionsfeder (30) umfassen, **dadurch gekennzeichnet dass** die Aktivierungsmittel eine Vielzahl von im zentralen Körper (10) vorgesehenen Schlitzen (20) umfassen, die einen rampenartigen Boden (60, 61, 71, 2, 81, 82) derart aufweisen, dass eine wechselseitige Drehung zwischen dem äußeren Ring (15) und dem inneren Ring (2) in radialer Richtung eine Einwirkung auf die Kugeln oder Walzen (17) erzeugt, wobei eine elastische Federspannung der Kompressionsfeder (30), die zwischen dem inneren Ring (2) und dem äußeren Ring (15) wirkt, die Kugeln oder Walzen (17) radial nach außen in einer extrahierten Position halten.

2. Reibring nach Anspruch 1, **dadurch gekennzeichnet, dass** er am inneren Ring (2) einen Federsitz (31) umfasst, wobei der Federsitz (31) dazu in der Lage ist, einen Stoßstift (32) aufzunehmen, der zum äußeren Ring (15) gehört, wobei die Kompressionsfeder (30) zwischen dem Stoßstift (32) und einem Ende des Sitzes (33) wirkt.

3. Reibring nach einem oder mehreren der vorherigen Ansprüche, **dadurch gekennzeichnet, dass** er am inneren Ring (2) ein Einsatzteil (34) zur Verbindung des Federsitzes (31) nach außen umfasst, wobei der Einsatzteil (34) an das axiale Ende des Körpers (10) des inneren Rings (2) führt.

4. Reibring nach einem oder mehreren der vorherigen Ansprüche, **dadurch gekennzeichnet, dass** der Einsatzteil (34) benachbart, aber beabstandet, zum Stoßende (33) des Federsitzes (31), an dem die Kompressionsfeder (30) wirkt, in den Federsitz (31) führt.

5. Reibring nach einem oder mehreren der vorherigen Ansprüche, **dadurch gekennzeichnet, dass** er am zentralen Körper (10) des inneren Rings (2) eine Aushöhlung (50) umfasst, welche in einer axialen Richtung am Ende des zentralen Körpers (10), das demjenigen gegenüber liegt, das einen Flansch (11) definiert, offen ist, um die Kompressionsfeder (30) aufzunehmen, wobei zudem ein Arretierspiralring (18) vorhanden ist, um den äußeren Ring (15) in Position zu halten.

6. Reibring nach einem oder mehreren der vorherigen Ansprüche, **dadurch gekennzeichnet, dass** er am zentralen Körper (10) eine Positionierungsrampe (61) umfasst, die an der Fortführung einer Wirkrampe (60) angeordnet ist, um während des Zusammenbaus das Arretiermittel (17) aufzunehmen, wobei sich am Flansch (11) des zentralen Körpers (10) eine Aufnahme für die Feder (62) befindet, die einen erhabenen Anfangsteil (63) und einen abgesenkten Endteil (64) aufweist, wobei sich im abgesenkten Endteil (64) die Kompressionsfeder (30) befindet, wobei der äußere Ring (15) einen axialen Stift (65) aufweist, der mit dem Ende der Kompressionsfeder (30) in Eingriff kommen kann, um das Arretiermittel (17) radial nach außen zu drücken.

7. Reibring nach einem oder mehreren der vorherigen Ansprüche, **dadurch gekennzeichnet, dass** der axiale Stift (65) dazu geeignet ist, auf der Seite des erhabenen Teils (63) gegen das Ende des abgesenkten Endteils (64) zu stoßen, um als Drehung blockierendes Element zu wirken und, sobald der Reibring zusammengebaut ist, die Passage des Arretiermittels (17) in die Positionierungsrampe (61) zu verhindern.

8. Reibring nach einem oder mehreren der vorherigen Ansprüche, **dadurch gekennzeichnet, dass** er am inneren Ring (2) Schlitze umfasst, die eine erste Rampe (71) und eine zweite Rampe (72) definieren, die gegenseitig gegenüberliegend mit zwischen ihnen angeordnetem Scheitelpunkt angeordnet sind, wobei sich am Flansch (11) des inneren Rings (2) ein bidirektionaler Sitz (73) befindet, der eine erste Feder (74) und eine zweite Feder (75) aufnimmt, die wechselseitig gegenüber liegen, wobei ein mit dem äußeren Ring (15) verbundener bidirektionaler Stift (76) zwischen den Federn (74, 75) anordenbar ist.

9. Reibring nach Anspruch 1, **dadurch gekennzeichnet, dass** er am inneren Ring (2) Schlitze umfasst, die eine erste Rampe (81) und eine zweite Rampe (82) definieren, die gegenüberliegend mit zwischen ihnen angeordnetem Scheitelpunkt angeordnet sind, wobei einer der Schlitze eine erste Schraubenfeder (86) und eine zweite Schraubenfeder (87) aufnimmt, die sich wechselseitig gegenüber befinden, wobei eines der entfernbaren Arretiermittel (17) zwischen der ersten und der zweiten Feder (86, 87) angeordnet ist, wobei beide Federn durch Expansion am entfernbaren Arretiermittel einwirken, wenn sich das entfernbare Arretiermittel am Scheitelpunkt befindet.

10. Reibring nach Anspruch 9, **dadurch gekennzeichnet, dass** der eine Schlitz Führungssitze (84, 85) für die Federn (86, 87) umfasst, wobei sich die Führungssitze (84, 85) am inneren Ring (2) am Umfang erstrecken, beginnend von den gegenüberliegenden Enden des Schlitzes, der die erste und die zweite Feder (86, 87) aufnimmt, wobei die Führungssitze (84, 85) eine solche Länge aufweisen, dass sie die jeweilige Feder (86, 87) vollständig aufnehmen, wenn sie vollständig zusammengedrückt ist.

11. Reibring nach Anspruch 1, **dadurch gekennzeichnet, dass** er am inneren Ring (2) Schlitze umfasst, die eine erste Rampe (81) definieren, wobei einer der Schlitze eine erste Schraubenfeder (86) aufnimmt, welche durch Expansion zwischen einer Bodenwand des Schlitzes und einem des entfernbaren Arretiermittels (17) einwirkt, wobei die Bodenwand an einem Führungssitz (84) vorgesehen ist, der am Umfang am inneren Ring (2) angeordnet ist, beginnend von einem Ende des Schlitzes, der die erste Feder (86) aufnimmt, wobei der Führungssitz (84) eine solche Länge aufweist, dass die erste Feder (86) vollständig aufnimmt, wenn sie vollständig zusammengedrückt ist.

## Revendications

1. Bague de frottement (1) pour des arbres de frottement, en particulier pour enrouler des bobines, comprenant une bague interne (2), qui peut être agencée sur un arbre de frottement (3) et est associée à une bague externe (15), à partir de laquelle des moyens de verrouillage constitués par des billes ou galets (17) dépassent pour verrouiller de façon détachable le noyau d'une bobine (40) qui peut être accouplée audit arbre de frottement (3), des moyens d'activation étant en outre ménagés sur le corps central (10) de ladite bague interne (2) pour activer lesdits moyens de verrouillage (17) par rotation mutuelle entre ladite bague interne (2) et ladite bague externe (15), et des moyens élastiques (30) qui comprennent un ressort de compression (30), **caractérisée en ce que** lesdits moyens d'activation comprennent une pluralité de fentes (20), ménagées dans ledit corps central (10), qui ont un fond de type rampe (60, 61, 71, 2, 81, 82) de sorte qu'une rotation mutuelle entre la bague externe (15) et la bague interne (2) produise une action sur lesdits billes ou galets (17) dans une direction radiale, une poussée élastique dudit ressort de compression (30) qui agit entre ladite bague interne (2) et ladite bague externe (15) maintenant lesdits billes ou galets (17) radialement vers l'extérieur dans une position extraite.

2. Bague de frottement selon la revendication 1, **caractérisée en ce qu'**elle comprend, sur ladite bague interne (2), un siège de ressort (31), ledit siège de ressort (31) pouvant loger une broche de butée (32) qui est associée à ladite bague externe (15), ledit ressort de compression (30) agissant entre ladite broche de butée (32) et une extrémité dudit siège (33).

3. Bague de frottement selon une ou plusieurs des revendications précédentes, **caractérisée en ce qu'**elle comprend, sur ladite bague interne (2), une partie d'insertion (34) pour le raccordement dudit siège de ressort (31) à l'extérieur, ladite partie d'insertion (34) menant au niveau de l'extrémité axiale dudit corps (10) de ladite bague interne (2).

4. Bague de frottement selon une ou plusieurs des revendications précédentes, **caractérisée en ce que** ladite partie d'insertion (34) mène dans ledit siège de ressort (31) à proximité, mais espacée, de l'extrémité de butée (33) dudit siège de ressort (31) où ledit ressort de compression (30) agit.

5. Bague de frottement selon une ou plusieurs des revendications précédentes, **caractérisée en ce qu'**elle comprend, sur le corps central (10) de ladite bague interne (2), un creux (50) qui est ouvert dans une direction axiale sur l'extrémité dudit corps central (10) qui est opposée à celle qui définit une bride (11), afin de loger ledit ressort de compression (30), un ressort spiral de verrouillage (18) y étant également présent afin de retenir ladite bague externe (15) en position.

6. Bague de frottement selon une ou plusieurs des revendications précédentes, **caractérisée en ce qu'**elle comprend, sur ledit corps central (10), une rampe de positionnement (61) agencée sur le prolongement d'une rampe active (60), afin de loger, pendant l'assemblage, lesdits moyens de verrouillage (17), sur la bride (11) dudit corps central (10), un réceptacle pour le ressort (62) qui a une partie initiale surélevée (63) et une partie finale enfoncée (64) y étant présent, ledit ressort de compression (30) étant présent dans ladite partie finale enfoncée (64), ladite bague externe (15) ayant une broche axiale (65) qui peut engager l'extrémité dudit ressort de compression (30) afin de pousser lesdits moyens de verrouillage (17) radialement vers l'extérieur.

7. Bague de frottement selon une ou plusieurs des revendications précédentes, **caractérisée en ce que** ladite broche axiale (65) est adaptée pour venir en butée contre l'extrémité de ladite partie enfoncée (64), sur le côté de ladite partie surélevée (63), afin d'agir en tant qu'élément de verrouillage de rotation et empêcher, une fois que ladite bague de frottement a été assemblée, le passage desdits moyens de verrouillage (17) dans ladite rampe de positionnement (61).

8. Bague de frottement selon une ou plusieurs des revendications précédentes, **caractérisée en ce qu'**elle comprend, sur ladite bague interne (2), des fentes qui définissent une première rampe (71) et une seconde rampe (72) qui sont agencées mutuellement opposées, le sommet étant agencé entre elles, un siège bidirectionnel (73) se trouvant sur la bride (11) de ladite bague interne (2), lequel loge un premier ressort (74) et un second ressort (75), qui sont mutuellement opposés, une broche bidirectionnelle (76) raccordée à ladite bague externe (15) pouvant être agencée entre lesdits ressorts (74, 75).

9. Bague de frottement selon la revendication 1, **caractérisée en ce qu'**elle comprend, sur ladite bague interne (2), des fentes qui définissent une première rampe (81) et une seconde rampe (82) qui sont agencées de façon opposée, leur sommet étant situé entre elles, l'une desdites fentes logeant un premier ressort hélicoïdal (86) et un second ressort hélicoïdal (87) qui sont mutuellement opposés, l'un desdits moyens de verrouillage amovibles (17) étant agencé entre lesdits premier et second ressorts (86, 87), lesdits deux ressorts agissant sur lesdits moyens de verrouillage amovibles par détente lorsque lesdits moyens de verrouillage amovibles sont situés sur ledit sommet.

10. Bague de frottement selon la revendication 9, **caractérisée en ce que** ladite fente comprend des sièges de guidage (84, 85) pour lesdits ressorts (86, 87), lesdits sièges de guidage (84, 85) étant étendus circonférentiellement sur ladite bague interne (2) en partant des extrémités opposées de la fente qui loge lesdits premier et second ressorts (86, 87), lesdits sièges de guidage (84, 85) ayant une longueur de nature à loger totalement le ressort respectif (86, 87) lorsqu'il est totalement comprimé.

11. Bague de frottement selon la revendication 1, **caractérisée en ce qu'**elle comprend, sur ladite bague interne (2), des fentes qui définissent une première rampe (81), l'une desdites fentes logeant un premier ressort hélicoïdal (86) qui agit par détente entre une paroi de fond de ladite fente et l'un desdits moyens de verrouillage amovibles (17), ladite paroi de fond étant ménagée sur un siège de guidage (84) qui est agencé circonférentiellement sur ladite bague interne (2) en partant d'une extrémité de la fente qui loge ledit premier ressort (86), ledit siège de guidage (84) ayant une longueur de nature à loger totalement le premier ressort (86) lorsqu'il est totalement comprimé.
